# EUROPÄISCHE PATENTSCHRIFT

(11) **EP 0 927 468 B1**
(45) Veröffentlichungstag und Bekanntmachung des Hinweises auf die Patenterteilung: **01.10.2003**
(21) Anmeldenummer: 97936568.1
(22) Anmeldetag: 29.07.1997
(51) Int. Cl.: H04H 1/00

(54) **VERFAHREN ZUR SPEICHERUNG VON NACHRICHTEN AUF EINER CHIPKARTE UND GERÄT ZUR DURCHFÜHRUNG DES VERFAHRENS**
METHOD TO STORE INFORMATION ON A CHIP CARD AND DEVICE TO CARRY OUT SAID METHOD
PROCEDE DE MISE EN MEMOIRE D'INFORMATIONS SUR UNE CARTE A PUCE ET APPAREIL PERMETTANT DE METTRE EN OEUVRE LEDIT PROCEDE

(30) Priorität: 18.09.1996 DE 19638011; 16.12.1996 DE 19652259
(43) Veröffentlichungstag der Anmeldung: 07.07.1999
(73) Patentinhaber: ROBERT BOSCH GMBH, 70442 Stuttgart (DE)
(72) Erfinder: WIETZKE, Joachim, D-31141 Hildesheim (DE); GROEGER, Klaus-Erwin, D-31199 Diekholzen (DE)
(86) Internationale Anmeldenummer: DE9701594
(87) Internationale Veröffentlichungsnummer: WO98012825

(56) Entgegenhaltungen:
- EP-A- 0 725 501
- EP-A- 0 725 505
- DE-A- 3 812 120
- DE-A- 4 112 828
- DE-A- 4 422 235

## Beschreibung

### Stand der Technik

Die Erfindung geht aus von einem Verfahren zum Speichern und Wiedergeben einer Nachricht, einem elektrischen Gerät zum Wiedergeben der Nachricht sowie einer Chipkarte nach der Gattung des unabhängigen Anspruchs.
Es sind bereits elektrische Geräte, insbesondere Autoradiogeräte, bekannt, die eine Aufnahme-Leseeinheit für Chipkarten aufweisen. Bisher werden diese sogenannten "Keycards" dafür verwendet, einen Code, Gerätepaßdaten oder eine TOM (Turn On Message/Turn Off Message) zu speichern und bei Benutzung der Keycard im Gerät auszugeben. Die TOM wird nach dem Einschalten des Geräts über ein Display zur Anzeige gebracht. Diese Mitteilung, die z.B. eine Information über das Gerät sein kann, muß bisher mit einem speziellen Lese-Schreibgerät auf die Speicherkarte geschrieben werden. Daher ist es dem Benutzer nicht möglich, die TOM für individuelle Nachrichten zu benutzen.

Außerdem offenbart die Druckschrift DE-A-4 112 828 ein Autoradio, bei dem vorgegebene Texte in einem Chipkarten festspeicher abgelegt sind.

### Vorteile der Erfindung

Das erfindungsgemäße Verfahren mit den kennzeichnenden Merkmalen des unabhängigen Anspruchs hat demgegenüber den Vorteil, daß eine individuelle Nachricht über ein Mikrophon in das elektrische Gerät eingegeben werden kann, dort digitalisiert wird und auf einer Chipkarte, die in das Gerät eingeführt wurde, abgespeichert werden kann. Eine solche abgespeicherte Nachricht kann vom Benutzer aufgerufen werden und wird im allgemeinen akustisch wiedergegeben. Diese Art der Speicherung und Wiedergabe einer Nachricht hat den Vorteil, daß der Benutzer, z.B. in einem Kraftfahrzeug, nicht vom Verkehr abgelenkt wird, sondern die Information ohne Unterbrechung abhören kann. Durch die Möglichkeit, eine individuelle Nachricht über eine Spracheingabe einzugeben, besteht die Möglichkeit, die Information in Form eines Fahrtenbuchs abzulegen.

Durch die in den Unteransprüchen aufgeführten Maßnahmen ist eine vorteilhafte Weiterbildung und Verbesserung des im unabhängigen Anspruch angegebenen Verfahrens möglich.

Besonders vorteilhaft ist es, daß die auf der Chipkarte gespeicherte Nachricht über das Gerät wiedergegeben werden kann, mit dem auch die Eingabe erfolgte. Alternativ dazu kann die Chipkarte dem Gerät entnommen werden und die darauf gespeicherte Information in einem weiteren externen Gerät ausgegeben werden. Damit übernimmt die Chipkarte die Funktion eines Notizblocks, oder Diktiergeräts. Die Nachricht kann auf Abruf beim Einschalten oder beim Ausschalten übermittelt werden. Weiterhin ist es von Vorteil, daß die Wiedergabe der Nachricht akustisch oder über ein Display erfolgen kann.

Da das Speichervolumen der Chipkarte begrenzt ist, ist es von Vorteil, daß bei einer Spracheingabe der freie Speicherplatz auf der Karte dargestellt wird.

Das erfindungsgemäße Autoradiogerät mit den kennzeichnenden Merkmalen des unabhängigen Anspruchs hat den Vorteil, daß durch eine einfache Erweiterung von bereits vorhandenen Möglichkeiten Chipkarten zu lesen eine akustische Eingabe von Nachrichten möglich wird. Dazu weist das erfindungsgemäße Autoradiogerät eine Schaltung auf, die es ihm ermöglicht eine akustische Eingabe über einen Rundfunksender, einen Kassettenrekorder oder über das angeschlossene Mikrophon zu unterscheiden.
Durch die in den Unteransprüchen aufgeführten Maßnahmen ist eine vorteilhafte Weiterbildung und Verbesserung des im unabhängigen Anspruch angegebenen elektrischen Gerät möglich. Besonders vorteilhaft ist es, daß das elektrische Gerät zwei Speichermöglichkeiten aufweist, wobei die eine Speichermöglichkeit über den Speicher der Chipkarte erfolgt.

### Zeichnung

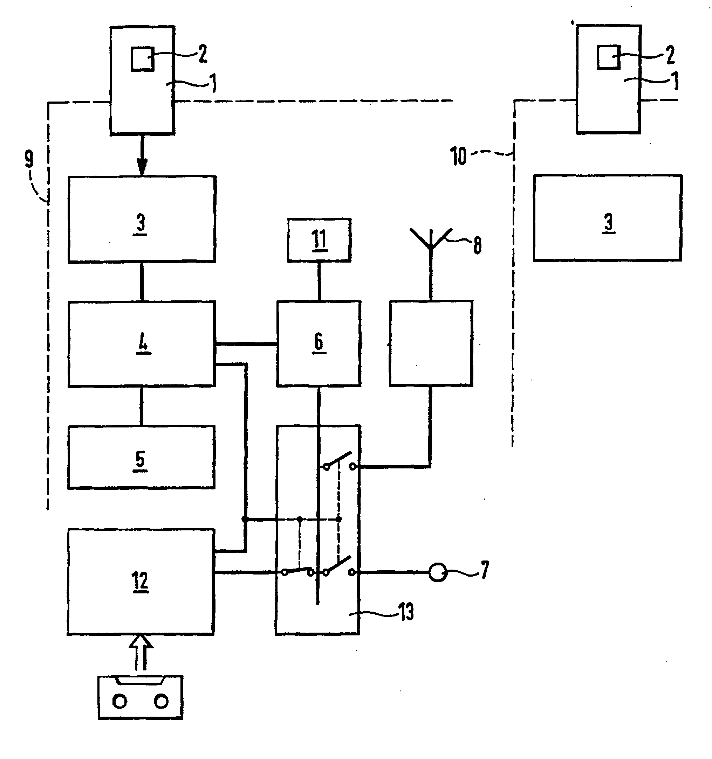

Ein Ausführungsbeispiel der Erfindung ist in der Zeichnung dargestellt und in der nachfolgenden Beschreibung näher erläutert. Es zeigt Figur 1 den schematischen Aufbau eines erfindungsgemäßen Autoradiogerätes.

### Beschreibung des Ausführungsbeispiels

Figur 1 zeigt ein Ausführungsbeispiel eines erfindungsgemäßen Autoradiogeräts.
Das Autoradiogerät 9 weist eine Aufnahme-Leseeinheit 3 für eine Chipkarte 1, im allgemeinen eine Multifunktionskarte, auf. Die Chipkarte 1 besitzt außer den Kontaktflächen zumindest einen Speicherbaustein 2. An die Steuerung 4 sind über eine Schaltung 13 der Radioempfänger 8, der Spracherkennungsbaustein 6, das Kassettengerät 12, sowie ein Speicher 5 angeschlossen. Werden akustische Informationen über das Mikrophon 7 des Geräts oder ein Kassettenlaufwerk 12 eingegeben, muß einen Schaltung 13 die jeweiligen anderen akustischen Quellen stummschalten und nur die gewünschte Eingabemöglichkeit mit der Steuerung verbinden. Zunächst muß die Sprache kodiert und digitalisieren werden. Für diesen Schritt stehen kommerzielle Sprachbausteine 6 zur Verfügung. Die Steuerung 4 erkennt eine Spracheingabe und legt die digitalisierten Informationen aus dem Sprachbaustein 6 nicht in einem eventuell vorhandenen, internen Speicher 5 des Gerätes ab, sondern schreibt sie in den Speicherbaustein 2 der Multifunktionskarte 1. Sollte bei einer Spracheingabe gerade keine Chipkarte im Gerät eingeführt sein, wird die Information von einer geeigneten Software zwischengespeichert und später auf die Chipkarte geschrieben. Entnimmt man die Speicherkarte 1 aus dem Gerät 9, besitzt man einen transportablen Notitzblock, dessen Informationen in jedem anderen Ausgabegerät wieder aufgerufen werden kann. So kann die Speicherkarte 1 auch in einem stationären Gerät 10, das eine Chipkartenleseeinheit 3 sowie eine Möglichkeit zur Auswertung und Wiedergabe der Informationen besitzt, ausgelesen werden.
Die Länge der aufgenommenen Nachricht ist ausschließlich abhängig von der Größe des Speicherbausteins auf der Multifunktionskarte. Die im Moment zur Verfügung stehenden Kartenspeicher lassen nur kurze Meldungen zu, aber die Entwicklung geht zu Speichervolumen von 16 bzw. 32 Mbyte. Für den Benutzer ist es günstig, wenn die Größe des zur Verfügung stehenden Speichers auf der Chipkarte angezeigt wird. Damit kann er erkennen, wenn der Speicher beschrieben ist. Eine solche Kontrolle des Besprechens kann über einen einfache Zeitmessung realisiert werden. Die Ausgabe des Dateninhalts kann durch eine Rückwandlung in Sprache und einen Lautsprecher 11 oder über ein Display erfolgen

Auch für Autoradiogeräte, die keinen Sprachbaustein und kein Mikrofon haben, ist das erfindungsgemäße Verfahren einsetzbar. Dabei wird die Speicherkarte von einem externen Schreibgerät beschrieben, das über Mikrofon und Sprachdigitalisierung verfügt, und vom Autoradiogerät ausgelesen. Die Wiedergabe der gespeicherte Information z.B. über eine Sprachausgabe 11 erfolgt auf Basis eines Mikroprozessors. Viele Prozesssoren können bereits Spachausgaben generieren.
Die akustische Ausgabe des Speicherinhalts der Chipkarte kann unkompliziert zur persönlichen Begrüßung oder zur Wiedergabe von Sicherheitsinformationen genutzt werden. Der Abruf der Nachricht, die im Speicher der Chipkarte hinterlegt ist, kann automatisch beim Einschalten des Gerätes erfolgen. Alternativ dazu kann die Information jederzeit durch Betätigung von geeigneten Tasten abgerufen werden. Die Information auf der Chipkarte ist transportierbar, damit kann die Chipkarte als Diktiergerät dienen. Während des Einsatzes in einem Kraftfahrzeug besteht die Möglichkeit, die Karte als Fahrtenschreiber zu nutzen. Dazu ist es möglich, automatisch die Zeit mit der dazugehörigen Information auf der Karte zu speichern.

Bei TIM-(Trafic Information Memory)-Autoradiogeräten, wie sie aus der DE 37 21 279 bekannt sind, sind ideale Voraussetzungen für das erfindungsgemäße Verfahren vorhanden, da hier bereits einn Sprachbaustein zur Digitalisierung der Sprache vorhanden ist.

## Patentansprüche

1. Verfahren zum Speichern und Wiedergeben einer Nachricht über ein elektrisches Gerät (9), insbesondere ein Autoradiogerät, das eine Aufnahme-/Leseeinheit (3) für Chipkarten (1) aufweist,
**dadurch gekennzeichnet,**
**daß** die Nachricht in Form einer akustischen Eingabe, vorzugsweise über ein Mikrofon (7), einen Radioempfänger (8) oder ein Kassettenlaufwerk (12), eingegeben wird,
**daß** die eingegebene Nachricht mittels eines Sprachbausteins (6) digitalisiert wird,
**daß** die digitalisierte Nachricht in einem Speicherbaustein (2) der in die Aufnahme-/Leseeinheit (3) eingeführten Chipkarte (1) abgelegt wird, und
**daß** die Nachricht auf Abruf, vorzugsweise nach Einschalten des elektrischen Geräts automatisch oder benutzerinitiiert, aus dem Speicherbaustein (2) der Chipkarte (1), vorzugsweise akustisch oder über ein Display, ausgegeben (11) wird.

2. Verfahren nach Anspruch 1, **dadurch gekennzeichnet, daß** die Wiedergabe der Nachricht über das elektrische Gerät (9) erfolgt.

3. Verfahren nach Anspruch 1, **dadurch gekennzeichnet, daß** die Wiedergabe der Nachricht über ein zweites Gerät (10) erfolgt.

4. Verfahren nach einem der Ansprüche 1 bis 3, **dadurch gekennzeichnet, daß** die Wiedergabe der Nachricht über ein Display (11) erfolgt.

5. Verfahren nach einem der Ansprüche 1 bis 4, **dadurch gekennzeichnet, daß** die Wiedergabe der Nachricht über eine Sprachausgabe (11) erfolgt.

6. Verfahren nach einem der Ansprüche 1 bis 5, **dadurch gekennzeichnet, daß** die Länge der Nachricht vom Speicherumfang der Karte abhängt.

7. Verfahren nach einem der Ansprüche 1 bis 6, **dadurch gekennzeichnet, daß** der freie Speicherplatz im Speicher (2) der Karte (1) während der Spracheingabe dargestellt wird.

8. Elektrisches Gerät, insbesondere Autoradiogerät, mit
- einer Aufnahme-/Leseeinheit (3) für Chipkarten (1), und
- einer Steuerung (4)
**gekennzeichnet durch**,
- Mittel (7, 8, 12) zur Eingabe akustischer Informationen, vorzugsweise in Form eines Mikrofons (7) und/oder eines Radioempfängers (8) und/oder eines Kassettenlaufwerks (12),
- einen Sprachbaustein (6) zur Digitalisierung einer in Form einer akustischen Information eingegebenen Nachricht, und eine Ausgestaltung der Steuerung (4) derart, daß diese eine eingegebene, im Sprachbaustein (6) digitalisierte Nachricht im Speicherbaustein (2) der in die Aufnahme-/Leseeinheit (3) eingelegten Chipkarte (1) ablegt und daß diese auf Abruf, vorzugsweise beim Einschalten des elektrischen Geräts oder benutzerinitiiert, eine im Speicher (2) der in die Aufnahme-/Leseeinheit (3) eingelegten Chipkarte (1) abgelegten Nachricht die Nachricht akustisch und/oder über ein Display (11) ausgibt.

9. Elektrisches Gerät, insbesondere Autoradiogerät mit einer Aufnahme-/Leseeinheit (3) für Chipkarten (1), einem Display (11) und einer Steuerung über Mikroprozessor (4) nach Anspruch 8 , **dadurch gekennzeichnet, daß** die Steuerung (4) eine Funktion aufweist, die eine Sprachausgabe des Inhalts einer Nachricht, die im Speicher (2) der Chipkarte (1) digital gespeichert ist, ermöglicht.

10. Elektrisches Gerät nach Anspruch 8 oder 9, **dadurch gekennzeichnet, daß** das Gerät eine Schaltung (13) aufweist, die eine Audioeingabe über mehrere Eingabegeräte (7, 8, 12) erlaubt.

## Claims

1. Method for storing and playing back a message using an electrical unit (9), particularly a car radio set, which has a holding/reading unit (3) for chip cards (1),
**characterized**
**in that** the message is input in the form of an audible input, preferably using a microphone (7), a radio receiver (8) or a cassette mechanism (12),
**in that** the message which is input is digitized using a voice chip (6),
**in that** the digitized message is stored in a memory chip (2) on the chip card (1) inserted into the holding/reading unit (3), and
**in that** the message is output (11) upon request, preferably after the electrical unit has been turned on, automatically or when initiated by a user, from the memory chip (2) on the chip card (1), preferably audibly or using a display.

2. Method according to Claim 1, **characterized in that** the message is played back using the electrical unit (9).

3. Method according to Claim 1, **characterized in that** the message is played back using a second unit (10).

4. Method according to one of Claims 1 to 3, **characterized in that** the message is played back using a display (11).

5. Method according to one of Claims 1 to 4, **characterized in that** the message is played back using a voice output unit (11).

6. Method according to one of Claims 1 to 5, **characterized in that** the length of the message depends on the storage capacity of the card.

7. Method according to one of Claims 1 to 6, **characterized in that** the free memory space in the memory (2) on the card (1) is displayed during voice input.

8. Electrical unit, particularly a car radio set, having
- a holding/reading unit (3) for chip cards (1), and
- a controller (4),
**characterized by**
- means (7, 8, 12) for inputting audible information, preferably in the form of a microphone (7) and/or a radio receiver (8) and/or a cassette mechanism (12),
- a voice chip (6) for digitizing a message which has been input in the form of audible information, and a form of the controller (4) which is such that said controller stores a message which has been input, and which has been digitized in the voice chip (6), in the memory chip (2) on the chip card (1) inserted into the holding/reading unit (3) and such that said chip card, upon request, preferably when the electrical unit is turned on, or when initiated by a user, outputs a message stored in the memory (2) on the chip card (1) inserted into the holding/reading unit (3) audibly and/or using a display (11).

9. Electrical unit, particularly a car radio set, having a holding/reading unit (3) for chip cards (1), a display (11) and a controller using a microprocessor (4), according to Claim 8, **characterized in that** the controller (4) has a function which allows voice output of the content of a message digitally stored in the memory (2) on the chip card (1).

10. Electrical unit according to Claim 8 or 9, **characterized in that** the unit has a circuit (13) which allows audio input using a plurality of input units (7, 8, 12).

## Revendications

1. Procédé d'enregistrement et de reproduction d'une information par un appareil électrique (9) notamment un autoradio comportant une unité d'enregistrement/lecture (3) de carte à puce (1),
**caractérisé en ce qu'**
on introduit l'information sous la forme d'une entrée acoustique de préférence par micro (7), un récepteur (8) ou un lecteur de cassette (12), on numérise l'information introduite à l'aide d'un composant vocal (6), on enregistre l'information numérique dans un composant de mémoire (2) de la carte à puce (1) introduite dans l'unité d'enregistrement/lecture (3), et
sur appel de préférence lors du branchement de l'appareil électrique, automatiquement ou si l'utilisateur lance l'opération, on émet l'information à partir du composant de mémoire (2) de la carte à puce (1) de préférence par une émission acoustique ou un afficheur (11).

2. Procédé selon la revendication 1,
**caractérisé en ce que**
l'information est reproduite par l'appareil électrique (9).

3. Procédé selon la revendication 1,
**caractérisé en ce que**
la reproduction de l'information se fait par l'intermédiaire d'un second appareil (10).

4. Procédé selon l'une quelconque des revendications 1 à 3,
**caractérisé en ce que**
la reproduction de l'information se fait par l'intermédiaire d'un afficheur (11).

5. Procédé selon l'une quelconque des revendications 1 à 4,
**caractérisé en ce que**
la reproduction de l'information se fait par une émission vocale (11).

6. Procédé selon l'une quelconque des revendications 1 à 5,
**caractérisé en ce que**
la durée de l'information dépend de la capacité de mémoire de carte.

7. Procédé selon l'une quelconque des revendications 1 à 6,
**caractérisé en ce que**
l'emplacement de mémoire libre dans la mémoire (2) de la carte (1) est affiché pendant l'entrée vocale.

8. Appareil électrique notamment autoradio comportant une unité d'enregistrement/lecture (3) pour des cartes à puce (1) ainsi qu'une commande (4),
**caractérisé par**
- des moyens (7, 8, 12) pour introduire des informations acoustiques de préférence sous la forme d'un micro (7) et/ou d'un récepteur radio (8) et/ou d'un lecteur de cassette (12),
- un composant vocal (6) pour numériser une information introduite sous la forme d'une information acoustique ainsi qu'une réalisation de la commande (4) de façon que celle-ci enregistre une information introduite, numérisée par le composant vocal (6) dans un composant de mémoire (2) de l'unité enregistrement/lecture (3) de la carte à puce (1), et
- que celle-ci sur appel de préférence lors du branchement de l'appareil électrique ou à l'initiative de l'utilisateur, émette de manière acoustique et/ou par un afficheur (11), l'information étant enregistrée dans la mémoire (2) de la carte à puce (1) placée dans l'enregistreur/lecteur (3) pour émettre cette information.

9. Appareil électrique notamment autoradio comportant un lecteur/enregistreur (3) de carte à puce (1), un afficheur (11) et une commande par microprocesseur (4) selon la revendication 8,
**caractérisé en ce que**
la commande (4) a une fonction qui permet une émission vocale du contenu de l'information enregistrée de manière numérique dans la mémoire (2) de la carte à puce (1).

10. Appareil électrique selon la revendication 8 ou 9,
**caractérisé en ce que**
l'appareil comporte un circuit (13) qui permet l'introduction audio par plusieurs appareils d'entrée (7, 8, 12).
